# EUROPÄISCHE PATENTSCHRIFT

(11) **EP 3 429 724 B1**
(45) Veröffentlichungstag und Bekanntmachung des Hinweises auf die Patenterteilung: **26.02.2020**
(21) Anmeldenummer: 17720006.0
(22) Anmeldetag: 14.03.2017
(51) Int. Cl.: B01D 39/16

(54) **FILTERELEMENT UND VERFAHREN ZU SEINER HERSTELLUNG**
FILTER ELEMENT AND METHOD TO PRODUCE IT
ÉLÉMENT FILTRANT ET SON PROCÉDÉ DE FABRICATION

(30) Priorität: 18.03.2016 DE 102016105104
(43) Veröffentlichungstag der Anmeldung: 23.01.2019
(73) Patentinhaber: Herding GmbH Filtertechnik, 92224 Amberg (DE)
(72) Erfinder: HERDING, Walter, 92224 Amberg (DE); HERDING, Urs, 92224 Amberg (DE); MARX, Martina, 92224 Amberg (DE); HAJEK, Stefan, 92224 Amberg (DE)
(74) Vertreter: Schmitt-Nilson Schraud Waibel Wohlfrom Patentanwälte Partnerschaft mbB
(86) Internationale Anmeldenummer: PCT/EP2017/055977
(87) Internationale Veröffentlichungsnummer: WO 2017/157930

(56) Entgegenhaltungen:
- JP-A- 2002 035 518
- US-A1- 2016 024 269

## Beschreibung

Gegenstand der Erfindung ist ein Verfahren zur Herstellung eines durchströmungsporösen, eigenstabilen Filterelements mit einem Filterkörper aus gesintertem Kunststoff sowie ein durch dieses Verfahren hergestelltes Filterelement.

Es ist ein durchströmungsporöses, eigenstabiles Filterelement bekannt, welches aus zusammengesinterten Polyethylenteilchen besteht. Polyethylenteilchen werden bei Temperaturen von 160 bis 180°C an ihrer Oberfläche klebrig, so dass die Dauereinsatztemperatur des bekannten Filterelements niedrig ist. Schon unter 80°C beginnt ein Temperaturbereich, in dem ein Dauereinsatz wegen bleibender plastischer Verformungen nicht mehr opportun ist.

Es ist in Betracht gezogen worden, den Filterkörper aus einem temperaturbeständigeren Kunststoff herzustellen, um höhere Dauereinsatztemperaturen für das Filterelement zu erreichen. Allerdings lassen sich temperaturbeständige Hochleistungskunststoffe bekanntermaßen nur sehr schlecht bis gar nicht zu einer porösen Festkörperstruktur sintern. Deswegen werden gängige Hochleistungskunststoffe üblicherweise nicht gesintert, sondern auf andere Weise geformt, etwa durch Spritzguss oder Extrusion. Soweit Sinterprozesse für Hochleistungskunststoffe vereinzelt in Betracht gezogen wurden, wurde es für unerlässlich gehalten, diese Sinterprozesse unter Druck durchzuführen, um ein zusammenhängendes und mechanisch stabiles Sintergefüge erzeugen zu können. Das reduziert aber die Porosität des entstehenden Sintergefüges in einer für Filteranwendungen nicht mehr sinnvollen Weise.

In der WO 2005/053818 A1 wird deswegen vorgeschlagen, zur Herstellung eines porösen Filterkörpers aus temperaturbeständigem Kunststoff, um die gewünschte Temperaturbeständigkeit zu erzielen, die als Ausgangsmaterial verwendeten Filterkörperteilchen nicht zu sintern, sondern mit Hilfe eines Klebstoffs miteinander zu verkleben, um eine poröse Filterkörperstruktur zu erhalten. Der Filterkörper ist aufgebaut mit ersten Materialteilchen aus einem Hochleistungskunststoff und zweiten Teilchen aus einem körnigen Kunststoff-Ausgangsmaterial, die durch Vermischen in einen Zustand gebracht werden, in dem die Verklebung durch Erwärmen auf die Verklebungstemperatur durchgeführt werden kann. Bei Erreichen einer Temperatur nahe der Verklebungstemperatur geht das körnige Kunststoff-Ausgangsmaterial der zweiten Teilchen in einen fließenden Zustand über und bildet an den Berührungsstellen der ersten Materialteilchen Verklebungsknoten, wohingegen die sonstigen Räume zwischen den ersten Materialteilchen im Wesentlichen frei von Klebstoff sind. Der Klebstoff kann entweder vom duroplastischen Typ sein oder vom thermoplastischen Typ sein.

Aus der JP H 8-168620 sowie der JP 2002-336619 sind Vorschläge bekannt geworden, ein gesintertes Filterelement auf Basis von Polysulfon herzustellen.

In der JP 2002-35518 ist vorgeschlagen worden, zur Herstellung eines gesinterten Filterelements auf Basis von Polyphenylensulfid auf Polyphenylensulfid-Compounds als Ausgangsmaterial zurückzugreifen. Zur Herstellung des Ausgangsmaterials wird Polyphenylensulfid zusammen mit geeigneten Füllstoffen aufgeschmolzen und homogen zu einem Compound vermischt. Es wird berichtet, dass sich bei geeigneter Wahl der Compound-Zusammensetzung und Vermahlung des Ausgangsmaterials zu einem Granulat mit geeigneter Korngröße poröse Platten durch Sintern herstellen ließen. Über die mechanische Stabilität dieser Sinterplatten ist nichts bekannt. Allerdings wird auch berichtet, dass der Sinterpozess scheitert, sobald dem Ausgangsmaterial nicht gefülltes Polyphenylensulfid zugesetzt wird.

Die US 2016/0024269 A1 zeigt poröse Elemente, die gesinterte Polymerpartikel zur Anwendung bei höheren Temperaturen enthalten. Die Polymerpartikel können aus einer thermoplastischen Zusammensetzung, die ein Polyarylensulfid enthält, gebildet sein.

Aufgabe der vorliegenden Erfindung ist es, ein Verfahren zur Herstellung eines bei erhöhter Betriebstemperatur einsetzbaren und auch bei erhöhter Betriebstemperatur noch hydrolysebeständigen Filterelements sowie ein entsprechendes Filterelement anzugeben. Das Filterelement soll insbesondere eigenstabil sein und eine ausreichende Festigkeit besitzen, um im Gegenstromverfahren durch Druckluftimpulse abreinigbar zu sein.

Die Erfindung schlägt ein Verfahren zum Herstellen eines durchströmungsporösen, eigenstabilen Filterelements gemäß Anspruch 1 sowie ein durchströmungsporöses, eigenstabiles Filterelement gemäß Anspruch 7 vor, mit einem ein poröses Sintergefüge bildenden Filterkörper, der mit Filterkörperteilchen aufgebaut ist, die wenigstens zum Teil Polysulfidteilchen sind.

Sintern bezeichnet eine Art der Ausbildung eines Sintergefüges aus einzelnen Teilchen zu einem Festkörper unter Wärmeeinwirkung. Das Ausgangsmaterial zur Ausbildung eines Festkörpers mit Sintergefüge ist normalerweise pulverförmig, d.h. aus einzelnen Ausgangsmaterialteilchen aufgebaut. Beim Sintern verbindet sich das pulverförmige Ausgangsmaterial und es entsteht aus den Ausgangsmaterialteilchen ein zusammenhängendes Festkörpergefüge, das Sintergefüge. Die Ausbildung des Sintergefüges, insbesondere dessen Struktur, kann durch Sintertemperatur und Sinterzeit gesteuert werden. Beim Sintern verfestigt sich das anfangs pulverförmige Material vor allem durch Diffusion, d.h.Wandern von Atomen einzelner miteinander in Kontakt stehender Ausgangsmaterialteilchen über eine Kontaktstelle in ein jeweils anliegendes Ausgangsmaterialteilchen, und Rekristallisation, d.h. Kristallneubildungen an kaltverfestigten Stellen des Sintergefüges. Durch Sintern können Formteile oder Halbzeuge hergestellt werden. Im Allgemeinen werden Metalle und Keramiken gesintert, es können aber auch bestimmte Kunststoffe gesintert werden, insbesondere einfache Thermoplaste wie Polyethylen. In den meisten Fällen wird das pulverförmige Ausgangsmaterial vor dem Sintern gepresst, so dass dieses eine gewünschte Form annimmt und außerdem verdichtet wird. Durch die Verdichtung vergrößert sich die Berührungsfläche zu anderen Pulverteilchen. Das unterstützt den Sintervorgang und macht ihn in vielen Fällen erst möglich, denn der Sinterprozess wird begünstigt durch eine möglichst große Anzahl von Kontaktstellen zwischen den einzelnen Ausgangsmaterialteilchen. Das ist für die Fähigkeit eines Materials, ein Sintergefüge auszubilden, eine wichtige Voraussetzung, denn die treibende Kraft für den Sinterprozess liegt darin, die Energie zur Aufrechterhaltung der Grenzfläche über die Verringerung der Oberfläche zu reduzieren. Es ist aus diesen Gründen zur Ausbildung eines mechanisch stabilen Sintergefüges auch günstig, während des Sinterprozesses Druck auf das zu sinternde Material auszuüben. Allerdings ist das Sintern unter Druck wenig geeignet zur Herstellung von porösen oder gar durchströmungsporösen Festkörpern, die eine Durchströmung von Fluid erlauben, weil durch den während des Sinterprozesses ausgeübten Druck die Ausbildung von Poren unterdrückt wird. Zur Ausbildung von Filterkörpern mittels Sinterprozessen sollte daher Ausüben von Druck während des Sinterprozesses vermieden werden. In aller Regel geht man dabei so vor, dass das pulverförminge Ausgangsmaterial nicht gepresst wird, sondern in eine Sinterform eingefüllt wird, die während des Einfüllens des Pulvers gerüttelt wird, damit die Pulverteilchen eine einigermaßen dichte Packung einnehmen. So kann beim Sintern ein poröser Filter entstehen, der eine Durchströmung einer fluiden Phase - insbesondere Gas oder Flüssigkeit - ermöglicht.

Der Filterkörper soll aus den zusammengesinterten Filterkörperteilchen aufgebaut sein. Das bedeutet, dass die Filterkörperteilchen während des Sinterprozesses miteinander ein mechanisch stabiles Sintergefüge mit einer durchströmungsporösen Struktur ausbilden. Dies schließt nicht aus, dass außerdem noch Zusätze und/oder Füllstoffe vorhanden sind, die in das Sintergefüge eingebaut sind bzw. während des Sinterprozesses in das Sintergefüge eingebaut werden. Die Füllstoffe sollen aber nicht selbst das Sintergefüge bilden, sondern das Sintergefüge soll im Wesentlichen durch die Filterkörperteilchen aufgebaut sein. Die Erfindung schlägt also vor, dass das Sintergefüge des Filterkörpers ganz oder wenigstens zum Teil mit Polysulfidteilchen ausgebildet ist. Dies schafft die im Vergleich zu bekannten Filterelementen mit Filterkörpern aus Kunststoff verbesserte Temperaturbeständigkeit und Hydrolysebeständigkeit. Je höher der Anteil von Polysulfidteilchen am Sintergefüge ist, desto temperaturbeständiger und/oder hydrolysebeständeger kann das Filterelement sein.

Das Polysulfid kann insbesondere ein organisches Polysulfid sein. Vor allem kommen Polyarylsulfide in Betracht. Polysulfide sind eine Gruppe chemischer Verbindungen, welche Ketten von Schwefelatomen enthalten. Organische Polysulfide sind organische Verbindungen, die als funktionelle Gruppe Schwefel in Form von Schwefel-Schwefel-Bindung enthalten. Bei Polyarylsulfiden, etwa dem Polyphenylensulfid, sind aromatische Monomere über Schwefelatome miteinander verbunden.

Das Polysulfid kann insbesondere ein Polyphenylensulfid sein. Polyphenylensulfid ist unter der Kurzbezeichnung PPS bekannt und wird zuweilen auch Poly(thio-p-phenylen) genannt. Es hat die allgemeine Formel (SC₆H₄)ₙ und gehört zu den hochtemperaturbeständigen Kunststoffen. Polyphenylensulfid ist ein teilkristalliner Hochleistungskunststoff und gehört grundsätzlich zu den thermoplastischen Kunststoffen. Durch die Verbindung aromatischer Monomereinheiten über Schwefelatome entstehen besonders widerstandsfähige Polymere, deren gute mechanische Eigenschaften auch bei Temperaturen weit über 200 °C erhalten bleiben, so dass ein Dauereinsatz je nach Belastung bis 240 °C möglich ist. Kurzzeitig hält Polyphenylensulfid auch Belastungen bei Temperaturen bis zu 270 °C stand. Es ist zudem chemisch beständig gegenüber nahezu allen Lösemitteln, vielen Säuren und Laugen sowie bedingt gegen Luftsauerstoff auch bei hohen Temperaturen. Polyphenylensulfid hat in der Regel die folgenden Materialeigenschaften: Dichte: ca. 1350 kg/m³; Wasseraufnahme bei 23 °C: < 0,05 %; Zugmodul: etwa 3000 MPa; Schmelzpunkt DSC (bei 10 °C/min): 280 °C, dieser kann zwischen 275 °C und 290 °C variieren.

Polysulfide, insbesondere Polyarylsulfide werden normalerweise als Thermoplaste produziert. Beispielsweise gibt es lineares Polyphenylensulfid und verzweigtes Polyphenylensulfid. Beim verzweigten Polyphenylensulfid sind die verzweigten Polymerketten reversibel über physikalische Vernetzungspunkte miteinander verbunden. Beim linearen Polyphenylensulfid sind die Ketten gering verzweigt und lagern sich zu hochgeordneten Überstrukturen an. Lineares Polyphenylensulfid kann durch Blasformen, Extrusion oder Spritzgießen zu Bauteilen geformt werden. Zu etwa 80 % der Bauteile aus linearem Polyphenylensulfid werden im Spritzgießen gefertigt. Verzweigtes Polyphenylensulfid ist sehr viel eingeschränkter verarbeitbar. Es ist zumeist nur spritzgießbar und nur sehr bedingt extrudierbar. Es ist auch möglich, die meisten Polysulfide, insbesondere Polyarylsulfide wie Polyphenylensulfid, in einer vernetzten Konfiguration herzustellen, die duroplastischen Charakter hat. Solche Konfigurationen spielen wegen ihrer deutlich schwierigeren Verarbeitbarkeit allerdings technisch eine nur untergeordnete Rolle.

Polysulfide, und damit auch Polyphenylensulfid, sind nicht als besonders gut sinterbare Stoffe bekannt. Den Erfindern ist es nun erstmalig gelungen, aus Polysulfid-Filterkörperteilchen, insbesondere aus ungefüllten Polysulfid-Filterkörperteilchen, sogar eigenstabile poröse Sintergefüge herzustellen, die derartig offenporig sind, dass sie den Durchtritt von Fluid ermöglichen. Filterkörper aus diesen Polysulfid-Sintergefügen sind zum Einsatz als eigenstabile Lamellenfilterelemente geeignet. Die Filterelemente besitzen sogar ausreichend mechanische Stabilität, um eine Filterabreinigung durch Druckluftimpulse zu erlauben, wie das bei Filtereinrichtungen häufig praktiziert wird, insbesondere durch wiederkehrendes Beaufschlagen der Filterelemente nach dem Gegenstromprinzip.

Die Filterelemente können einen aus Filterkörperteilchen aufgebauten Filterkörper aufweisen, der zum großen Teil oder sogar im Wesentlichen aus Polysulfidteilchen aufgebaut ist. Insbesondere können alle Filterkörperteilchen Polysulfid enthalten. Wenigstens ein Teil der Filterkörperteilchen kann sogar ganz aus Polysulfid bestehen, d.h. wenigstens ein Teil der Filterkörperteilchen kann Polysulfid zu 100 % enthalten. Es ist sogar denkbar, dass alle Filterkörperteilchen aus Polysulfid bestehen, d.h. dass alle Filterkörperteilchen zu 100 % Polysulfid enthalten. Wenn hierbei ausgesagt wird, dass alle Filterkörperteilchen Polysulfidteilchen sind oder aus Polysulfid bestehen, soll dies bedeuten, dass das Sintergefüge des Filterkörpers aus Polysulfidteilchen aufgebaut ist, abgesehen von Zusätzen, die zwar in das Sintergefüge eingebaut sind, allerdings nicht Bestandteil des pulverförmigen Ausgangsmaterials sind, welches die Sinterstruktur des Filterkörpers ausbildet. Daraus ergibt sich, dass solche Zusätze nicht wesentlich zum Aufbau des Sintergefüges aus den pulverförmigen Ausgangsteilchen beitragen.

Bestimmte Ausführungsformen des Filterelements können einen Filterkörper aufweisen, der aus Polysulfidteilchen aufgebaut ist, die wenigstens zwei Polysulfide verschiedener Konfiguration enthalten. Dabei können einerseits einzelne der Polysulfidteilchen wenigstens zwei Polysulfide unterschiedlicher Konfiguration enthalten. Andererseits kann der Filterkörper mit ersten Polysulfidteilchen, die ein Polysulfid mit erster Konfiguration enthalten, sowie mit zweiten Polysulfidteilchen, die ein Polysulfid mit zweiter Konfiguration enthalten, aufgebaut sein. Beide Varianten können auch kombiniert auftreten. Selbstverständlich können bei allen Varianten neben dem ersten und dem zweiten Polysulfid noch weitere Polysulfide mit unterschiedlicher Konfiguration vorhanden sein. Wenn von Polysulfiden mit unterschiedlicher Konfiguration die Rede ist, so meint dies eine beliebige von anderen Konfigurationen verschiedene Konfiguration eines Polysulfids. Dabei können zwei Polysulfide unterschiedlicher Konfiguration durchaus vom selben Polysulfid-Typ, aber in unterschiedlicher Konfiguration sein, etwa in Form von zwei Polyphenylensulfiden, die jeweils unterschiedliche Konfiguration aufweisen. Beispielsweise kann ein und derselbe Polysulfid-Typ (etwa Polyphenylensulfid) einmal in einer rein thermoplastischen Konfiguration und einmal in einer bereits stärker vernetzten Konfiguration, die bereits duroplastische Eigenschaften zeigt, vorliegen.

Die Polysulfidteilchen enthalten insbesondere ungefülltes Polysulfid oder sind insbesondere ungefüllte Polysulfidteilchen. Damit soll gemeint sein, dass das Polysulfid-Ausgangsmaterial zur Herstellung des Sinterfüges ein Polysulfid ist, das keiner Aufbereitung unterzogen ist, wie sie allgemein unter dem Begriff "Compoundierung" bekannt ist. Dies bedeutet insbesondere, dass zur Herstellung der Polysulfidteilchen, die das Ausgangsmaterial zur Herstellung des Sintergefüges bilden, keine Zusätze, Zuschlagstoffe, Füllstoffe, Hilfsstoffe, Fasern oder dergleichen in das Polysulfidrohmaterial eingearbeitet sind. Allerdings kann das Polysulfid-Ausgangsmaterial zur Herstellung des Sinterfüges durchaus ein behandeltes Polysulfidrohmaterial sein, beispielsweise ein mechanisch behandeltes Polysulfid zur Herstellung einer geeignete Korngröße der Polysulfidteilchen als Ausgangsmaterial für den Sinterprozess und/oder ein thermisch behandeltes Polysulfidrohmaterial wie nachfolgend näher beschrieben. Experimentell hat sich herausgestellt, dass es gelingt, stabile Sintergefüge mit einem Anteil von 50 % und mehr ungefüllten Polysulfidteilchen herzustellen, insbesondere Sintergefüge aus vollständig ungefüllten Polysulfidteilchen herzustellen. Dies bedeutet, dass der Filterkörper bis zu 100 % Polysulfidteilchen enthalten kann.

Experimentell hat sich gezeigt, dass das Sintern von Polysulfidteilchen zu einem eigenstabilen und porösen Sintergefüge für einen Filterkörper begünstigt wird, wenn Polysulfidteilchen versintert werden, die ein getempertes Polysulfid enthalten. Beim Tempern wird das Polysulfid, beispielsweise als Granulat, über eine längere Zeit hinweg auf eine Temperatur unterhalb der Schmelztemperatur erhitzt. Das Sintergefüge des Filterkörpers bildet sich dann aus Polysulfidteilchen, die das getemperte Polysulfid enthalten. Sintert man Polysulfide wie Polyphenylensulfid im ungetemperten Zustand, stellt man fest, dass nur ein sehr kleines Fenster an geeigneten Temperaturen zur Verfügung steht, in denen sich überhaupt eine eigenstabile Sinterstruktur ausbildet. Im Falle von Polyphenylensulfid ist dieses Temperaturfenster beispielsweise nur 3 °C groß, nämlich von 300 - 303 °C. Sintert man dagegen getemperte Polysulfidteilchen, vergrößert sich dieses Fenster an geeigneten Sintertemperaturen, bei denen ein eigenstabiles Sintergefüge erreicht werden kann, das darüber hinaus sogar noch poröse Eigenschaften hat, beträchtlich, beispielsweise auf über 60 °C im Falle von Polyphenylensulfid. Außerdem stellt man fest, dass die mechanischen Eigenschaften der entstehenden Sinterkörper, insbesondere deren Sprödigkeit und Brüchigkeit, deutlich besser sind als bei Sinterkörpern, die aus ungetempertem Polysulfid-Ausgangsmaterial hergestellt sind. Das Tempern der Polysulfidteilchen kann insbesondere in einem Umluftofen unter Anwesenheit eines Oxidationsmittels erfolgen. Das Oxidationsmittel kann insbesondere Sauerstoff sein, z.B. Luftsauerstoff. Auch andere Oxidationsmittel sind denkbar, beispielsweise Schwefel oder organische Oxidationsmittel. Typischerweise wird dann nach dem Tempern des Polysulfids eine bestimmte Verringerung des Schmelzfließindex beobachtet. Die Schmelze des getemperten Polysulfids ist also in aller Regel bedeutend zähflüssiger als die Schmelze des reinen Polysulfids. Typische Temperaturen während des Temperns können etwas unterhalb des Schmelzpunkts bzw. Schmelzbereichs des Polysulfids liegen, z.B. zwischen 175 °C und 280 °C im Falle von Polyphenylensulfid. Je höher die Temperatur, desto kürzer kann generell die Zeit für das Tempern gewählt werden. Jedoch sollte die Temperatur immer mindestens so weit unterhalb der niedrigsten Schmelztemperatur liegen, dass ein Verkleben bzw. Verklumpen der Filterkörperteilchen während des Temperprozesses vermieden wird. Das pulverförmige Gemisch aus Filterkörperteilchen soll auch nach dem Termpervorgang noch pulvrig und rieselfähig bleiben. Insbesondere ist es günstig, wenn auch die Partikelgrößenverteilung der Filterkörperteilchen sich während des Temperprozesses nicht wesentlich ändert. Oftmals beobachet man eine Änderung der Farbe der Polysulfidteilchen während des Temperprozesses. Beispielsweise nehmen ursprünglich weiße bis gelbliche Polyphenylensulfidteilchen nach dem Tempern eine bräunliche bis braune Färbung an.

Es hat sich gezeigt, dass besonders gute Bedingungen für das Sintern der Filterkörperteilchen erzielt werden können, wenn die getemperten Polysulfidteilchen über eine Zeitdauer zwischen 60 min und 24 Stunden dem Temperprozess unterzogen worden sind. Insbesondere sind gute Sinterbedingungen gegeben für getemperte Polysulfidteilchen, die zwischen 2 Stunden und 12 Stunden, insbesondere zwischen 11 Stunden und 12 Stunden, dem Temperprozess unterzogen worden sind, wobei wie bereits angesprochen gilt, dass eher kürzere Temperzeiten gewählt werden können je höher die Temperatur während des Temperns gewählt wird. Bei Temperzeiten zwischen 11 und 12 Stunden ist im Falle von Filterkörperteilchen aus reinem Polyphenylensulfid in der Regel eine Temperatur am oberen Rand des angegebenen Bereichs, etwa zwischen 260 °C und 280 °C, insbesondere bei etwa 270 °C geeignet.

Es wird vermutet, dass durch das Tempern eine Erhöhung der Molmasse des getemperten Materials bewirkt wird, weil sich Molekülketten verzweigen und/oder verlängern. Außerdem scheint es günstig zu sein, wenn die Temperung in einer oxidativen Umgebung erfolgt. Man spricht dann von thermooxidativer Molmassenerhöhung des Materials der Filterkörperteilchen. Es ist denkbar, dass unter diesen Bedingungen ein ursprünglich eigentlich thermoplastischer Kunststoff wie Polyphenylensulfid Eigenschaften annimmt, die eher charakteristisch sind für Duroplaste.

Überraschenderweise hat es sich gezeigt, dass besonders feste und zugleich wiederholt belastbare Sintergefüge erzeugt werden können, wenn die Polysulfidteilchen wenigstens ein getempertes Polysulfid und wenigstens ein nicht getempertes Polysulfid enthalten. Beispielweise können die Polysulfidteilchen eine Mischung von ersten Filterkörperteilchen mit der Konfiguration eines getemperten Polysulfids, insbesondere eines getemperten Polyphenylensulfids, und zweiten Polysulfidteilchen mit der Konfiguration eines ungetemperten Polysulfids, insbesondere eines ungetemperten Polyphenylensulfids, aufweisen. Dann können die beiden Polysulfide in einer solchen Weise zusammenwirken, dass die Struktur des sich ergebenden porösen Sintergefüges im Wesentlichen durch das getemperte Polysulfid bestimmt wird, wohingegen das ungetemperte Polysulfid für eine schnelle und feste Verbindung der Filterkörperteilchen untereinander sorgt.

Weiterhin hat sich gezeigt, dass gute Sinterergebnisse erzielt werden können, wenn die dem Sinterprozess unterzogenen Filterkörperteilchen einen Schmelzfließindex von höchstens 500 g/10 min, insbesondere von höchstens 250 g/10 min, insbesondere von höchstens 100 g/10 min haben. Der Schmelzfließindex gibt an, wieviel Gramm an Formmasse bei einem standardisierten Extrusionsprozess nach Aufschmelzen der Filterkörperteilchen während 10 min durch eine normierte Düse gedrückt werden. Dieser Prozess ist in der ASTM D 1238-13, Procedure B festgelegt, insbesondere hinsichtlich der Temperatur und der auf die zu extrudierende Formmasse einwirkenden Belastung. Die angegebenen Werte beziehen sich auf den Zustand der Polysulfidteilchen unmittelbar vor Beginn des Sinterprozesses, d.h. bei Polysulfidteilchen aus getempertem Polysulfid auf die Polysulfidteilchen im getemperten Zustand.

Es können ausreichend eigenstabile Filterelemente erzielt werden mit einem Filterkörper, dessen Porosität mindestens 30% beträgt. Es ist sogar möglich, Porositäten von mindestens 50%, und sogar bis zu 70 % zu erzielen.

Insbesondere wurde festgestellt, dass sich Filterelemente herstellen lassen, bei denen der Filterkörper derart ausgebildet ist, dass in einer Fluidströmung ohne Fremdstoffbelastung ein Druckverlust über den Filterkörper hinweg, gemessen gegenüber einem Luftstrom ohne Fremdstoffbeladung bei einem Volumenstrom von 12,011 m³/(m² x min) und bei einer luftdurchströmten Fläche des Filterkörpers von 256 mm x 256 mm mit einer Dicke von 4 mm, von höchstens 2000 Pa festgestellt werden kann, insbesondere von höchstens 1000 Pa, insbesondere zwischen 100 und 2000 Pa. Die Erfassung des Druckverlustes erfolgt hierbei bei Anströmung eines Filterelements mit nicht fremdstoffbeladenem Fluid, um einen durch zunehmende Belegung der Filteroberlächen mit Fremdstoffen im realistischen Betrieb stetig ansteigenden Druckverlust auszuschließen.

Das Filterelement kann insbesondere aus Polysulfidteilchen mit einer durchschnittlichen Größe von 50 bis 500 µm, insbesondere von 100 bis 350 µm, hergestellt sein. Unter Größe wird hierbei die mittlere Größe der Polysulfidteilchen unmittelbar vor Beginn des Sinterprozesses verstanden. Im Falle von getemperten Polysulfidteilchen also die mittlere Größe der Polysulfidteilchen nach dem Temperprozess.

Wie bereits angesprochen, ist es durchaus denkbar, dass der Filterkörper neben den Polysulfidteilchen noch weitere Bestandteile hat. Solche weiteren Bestandteile können organische und/oder anorganische Stoffe sein. Beispielsweise seien Hohlglaskugeln im Sinne eines anorganischen Bestandteils des Filterkörpers genannt, die etwa zur Reduzierung des Gewichts des Filterkörpers dienen können. Außerdem kann der Filterkörper weitere mineralische Stoffe enthalten, z. B. Siliziumoxide, Calziumverbindungen, Aluminiumoxide sein. Auch organische Bestandteile sind denkbar, beispielsweise Polytetrafluorethylen (PTFE)-Teilchen. Weiterhin kann der Filterkörper Ruß-Teilchen gegen statische Aufladung enthalten. Derartige weitere Bestandteile können im Filterkörper zwischen den das Sintergefüge ausbildenden Polysulfidteilchen vorhanden sein. Die weiteren Bestandteile sind in der Regel den Polysulfid-Ausgangsteilchen vor Beginn des Sinterprozesses beigemischt, so dass sie dann bei allmählicher Ausbildung des Sintergefüges in den Filterkörper eingebaut werden. Im Filterkörper wird in aller Regel der Anteil der die Sinterstrukur ausbildenden Teilchen gegenüber den weiteren Bestandteilen dominieren. Beispielsweise können zwischen 50 % und 100 % bezogen auf die Masse des Filterkörpers durch die Polysulfidteilchen gebildet sein. Die weiteren Bestandteile werden demgemäß in der Regel zwischen 50 % und 0 % bezogen auf die Masse des Filterkörpers ausmachen, häufig sogar deutlich weniger als 50 %, insbesondere im Bereich zwischen 0 % und 20 % oder sogar zwischen 0 % und 10 % bezogen auf die Masse des Filterkörpers liegen.

Der Filterkörper kann mit einer Beschichtung versehen sein, die auf einer Zuströmoberfläche des Filterelements aufgetragen ist. Die Beschichtung kann mit Partikeln aufgebaut sein. Insbesondere wird die Beschichtung eine kleinere Porengröße aufweisen als der Filterkörper. Mit einer solchen Beschichtung soll Oberflächenfiltration erreicht werden, so dass mittels des Filterelements auszufilternde Feststoff-Teilchen nicht in das Innere des Filterelements gelangen. Ein derart beschichtetes Filterelement lässt sich durch Gegenstrom-Druckstoßabreinigung sehr viel leichter abreinigen als ein unbeschichtetes Filterelement. Insbesondere kann die Beschichtung ein Antihaftmaterial enthalten, beispielsweise PTFE-Partikel.

Es können mehrere erfindungsgemäße Filterelemente in einer Filteranlage eingebaut sein, etwa in einem gemeinsamen Träger parallel zueinander in einer solchen Weise, dass ein Reinfluidraum auf der einen Seite der Filterelemente getrennt ist von einem Rohfluidraum auf der gegenüberliegenden Seite der Filterelemente. Normalerweise sitzt dann auf der Reinfluidseite stromabwärts von den Filterelementen ein Sauggebläse. Normalerweise ist zudem eine Einrichtung für die Gegenstrom-Druckstoßabreinigung der Filterelemente vorhanden, die deart ausgebildet ist, dass die Filterelemente von der Reinfluidseite her mit Druckluftstößen beaufschlagt werden können.

Experimentell hat sich gezeigt, dass auf die hierin beschriebene Weise Filterelemente erzeugt werden können mit einem Filterkörper, der in einem Zugversuch in Anlehnung an DIN EN ISO 527-2 (2012-06)mit einer Prüfgeschwindigkeit von 80 mm/min eine Zugfestigkeit von mindestens 1 N/mm², insbesondere von mindestens 2 N/mm², insbesondere mindestens 4 N/mm², und insbesondere zwischen 1 N/mm² und 25 N/mm² hat. Dabei beträgt eine Reißdehnung des Filterkörpers in diesem Zugversuch mindestens 0,2 mm, insbesondere mindestens 0,5 mm, insbesondere mindestens 1 mm, und insbesondere zwischen 0,2 mm und 10 mm.

Das Filterelement kann insbesondere als eigenstabiles und durchströmungsporöses Lamellenfilterelement ausgebildet sein.

Das Filterelement kann einen an den Filterkörper angeformten Filterkopf aufweisen. Der Filterkopf dient vor allem der Befestigung bzw. Halterung des Filterelements in einer Filtervorrichtung. Aus diesem Grund sollte der Filterkopf ausreichend mechanische Stabilität gewährleisten und so ausgebildet sein, dass er das gesamte Filterelement und ggf. auch die im Betrieb auftretenden Belastungen, wie sie beispielsweise durch Druckluftstöße bei der Abreinigung entstehen, aufnehmen kann. Der Filterkopf braucht nicht unbedingt in demselben Maße durchströmungsporös zu sein wie der Filterkörper. Er kann auch überhaupt nicht porös sein. Viel wichtiger ist mechanische Stabilität für den Filterkopf und seine Verbindung zum Filterkörper. Der Filterkopf kann mittels eines temperaturbeständigen Klebstoffs mit dem Filterkörper verbunden sein. Der Filterkopf kann auch auf sonstige Weise am Filterkörper angeformt sein, etwa als Prepreg, durch Angießen oder durch Anspritzen. Der Filterkopf kann insbesondere aus gesintertem Hochtemperaturkunststoff hergestellt sein oder als Spritzgussteil aus Hochtemperaturkunststoff hergestellt sein. Bei dem erfindungsgemäßen Filterelement kann insbesondere vorgesehen sein, dass der Filterkopf ebenfalls ein Polysulfid enthält, insbesondere dasselbe Polysulfid enthält wie der Filterkörper. Besonders günstig ist es, wenn der Filterkopf aus demselben Material hergestellt ist wie der Filterkörper oder aus einem Material, das dem Material des Filterkörpers ähnlich ist. Denn durch Verwendung möglichst gleicher oder jedenfalls gleichartiger Materialien für Filterkopf und Filterkörper lässt sich das thermische Ausdehnungsverhalten aller Teile des Filterelements aufeinander abstimmen. Das Auftreten von Spannungen unter thermischer Belastung kann so unterdrückt werden. Man macht sich hierbei zu Nutze, dass Polysulfide, wie beispielsweise Polyphenylensulfid, durch gängige Kunststoff-Formgebungsverfahren verarbeitbar sind. Beispielsweise kann ein Filterkopf aus Polyphenylensulfid an einen Filterkörper aus gesintertem Polyphenylensulfid im Spritzgussverfahren angespritzt werden.

Sofern das Filterelement neben einem Filterkopf auch und einen an den Filterkörper angeformten Filterfuß aufweist, kann auch dieser das Polyulfid enthalten und insbesondere aus demselben Material wie der Filterkörper hergestellt sein.

Es ist möglich, ein gesintertes Filterelement herzustellen, das für eine Dauereinsatztemperatur ausgebildet ist, die eine Temperatur im Bereich von 50 bis 200 °C, insbesondere von 80 bis 200 C, insbesondere von 100 bis 200 C, insbesondere 120 bis 200 C, ist. Dabei muss nicht jede Ausführungsform des Filterelements für den gesamten Temperaturbereich von 50 bis 200 C geeignet sein. Jede temperaturbeständige Ausführungsform soll jedoch eine maximale Dauereinsatztemperatur haben, die bei irgendeiner konkreten Temperatur im Bereich von 50 bis 200 C liegt. Das hier beschriebene Filterelement erweist sich als besonders hydrolysebeständig.

Ein weiterer Aspekt der vorliegenden Erfindung betrifft ein Verfahren zum Herstellen eines durchströmungsporösen, eigenstabilen Filterelements, mit den Schritten: Bereitstellen von Filterkörperteilchen, die wenigstens zum Teil Polysulfidteilchen sind, und Sintern der Filterkörperteilchen zu einem porösen Sintergefüge, um einen Filterkörper des Filterelements zu bilden.

Das Polysulfid kann ein organisches Polysulfid sein, insbesondere ein Polyarylsulfid wie Polyphenylensulfid. Alle Filterkörperteilchen können Polysulfid enthalten. Wenigstens ein Teil der Filterkörperteilchen kann sogar ganz aus Polysulfid bestehen. In manchen Fällen können sogar alle Filterkörperteilchen aus Polysulfid bestehen. Es können wenigstens zwei Polysulfide unterschiedlicher Konfiguration zum Aufbau des Filterkörpers verwendet werden.

Das Sintern der Filterkörperteilchen kann bei Umgebungsdruck erfolgen. Damit wird die Erzeugung eines porösen Sintergefüges begünstigt, welches dementsprechend einen hohen Fluiddurchsatz für den Filterkörper erlaubt. Anders ausgedrückt: Der sich im Betrieb über das Filterelement einstellende Druckverlust ist vergleichsweise gering.

Gute Ergebnisse für die mechanischen Eigenschaften des erzielten Sintergefüges lassen sich erzielen, wenn das Sintern bei einer Temperatur von 290 °C bis 350 °C erfolgt, insbesondere bei einer Temperatur von 310 °C bis 320 °C erfolgt. Dies gilt insbesondere für den Fall, dass die Polysulfidteilchen Polyphenylensulfidteilchen sind.

Geeignete Sinterdauern können je nach Geometrie und insbesondere Dicke des Filterkörpers zwischen 3 min und 180 min liegen, insbesondere zwischen 40 min und 100 min, insbesondere zwischen 60 min und 80 min.

Es hat sich gezeigt, dass der Sinterprozess im Falle von Filterkörperteilchen, die Polysulfid enthalten, sich wesentlich einfacher steuern lässt, wenn die Polysulfidteilchen vor dem Sintern einem Temperungsprozess unterzogen werden. Während des Temperprozesses werden die Polysulfidteilchen einer erhöhten Temperatur ausgesetzt, die in der Regel etwas kleiner sein sollte als die Schmelztemperatur der Polysulfidteilchen, bzw. die untere Grenze des Schmelzbereichs der Polysulfidteilchen. Beispielsweise hat es sich als günstig erwiesen, Polysulfidteilchen bei einer Temperatur 265 °C bis 275 °C zu tempern. Geeignete Zeitdauern für den Temperprozess liegen zwischen 7 und 24 Stunden mit der Maßgabe, dass je höher die Temperatur für den Temperprozess gewählt wird, desto kürzer die für den Temperprozess benötigte Zeit ist. Als besonders günstig haben sich eher längere Zeiträume für den Temperprozess erwiesen bei entsprechender Einstellung der Temperatur genügend weit unterhalb der niedrigsten Schmelztemperatur. Beispielsweise hat es sich gezeigt, dass sich Polysulfidteilchen besonders gut zu einem mechanisch stabilen durchströmungsporösen Filterkörper versintern lassen, wenn diese zuvor für 10 bis 12 Stunden getempert worden sind.

Der Temperprozess soll dabei nicht zu einen Verklumpen oder Verkleben der Polysulfidteilchen führen. Sollte dennoch ein gewisses Aneinanderhaften zu beobachten sein, kann es sinnvoll sein, die Polysulfidteilchen nach dem Temperprozess noch einer Auflockerungsprozedur zu unterziehen, beispielsweise durch Rütteln. Die Partikelgrößenverteilung der Polysulfidteilchen sollte sich somit nach dem Tempern nicht stark von der Partikelgrößenverteilung vor dem Tempern unterscheiden. Beispielsweise sind gute Ergebnisse erzielt worden bei einer durchschnittlichen Größe von 50 bis 500 µm, insbesondere 100 bis 350 µm, der Polysulfidteilchen vor dem Tempern.

Es hat sich als durchaus vorteilhaft herausgestellt, wenn bei dem Verfahren wenigstens zwei Polysulfide unterschiedlicher Konfiguration herangezogen werden, um die Polysulfidteilchen bereitzustellen. Beispielsweise kann wenigstens ein getempertes Polysulfid und wenigstens ein nicht getempertes Polysulfid herangezogen werden, um die Polysulfidteilchen bereitzustellen. Dies kann etwa in der Form geschehen, dass ein Polysulfid mit erster Konfiguration (beispielsweise getempertes Polyphenylensulfid) und ein Polysulfid mit zweiter Konfiguration (beispielsweise ungetempertes Polyphenylensulfid) als Ausgangsstoffe miteinander vermischt werden, um aus dem Gemisch Polysulfidteilchen zu bilden, die sowohl das Polysulfid erster Konfiguration als auch das Polysulfid zweiter Konfiguration enthalten. Man kann auch erste Polysulfidteilchen bereitstellen, die ein Polysulfid erster Konfiguration (beispielsweise getempertes Polyphenylensulfid) enthalten, sowie zweite Polysulfidteilchen bereitstellen, die ein Polysulfid zweiter Konfiguration (beispielsweise ungetempertes Polyphenylensulfid) enthalten, und dann den Filterkörper durch Vermischen der ersten und zweiten Polysulfidteilchen und Versintern erzeugen. Beide Varianten können auch kombiniert werden und es können noch weitere Bestandteile - mit oder oder ohne Polysulfid weiterer Konfiguration - zu den Filterkörperteilchen hinzugefügt werden oder weitere Filterkörperteilchen - mit oder oder Polysulfid weiterer Konfiguration -verwendet werden.

Wie bereits angesprochen ist es ohne Weiteres möglich, den Polysulfidteilchen weitere Komponenten insbesondere organische oder anorganische Komponenten, beizufügen. Das Vermischen von Polysulfidteilchen und weiteren Komponenten erfolgt nach der Bereitstellung der Polysulfidteilchen, kann dabei aber durchaus schon vor dem Tempern erfolgen. In Fällen, in denen durch das Tempern eine unerwünschte Änderung der Eigenschaften des Füllstoffs bzw. Zusatzstoffs befürchtet wird, kann die Zumischung von weiteren Komponenten auch nach dem Tempern erfolgen, so dass ein fertiges Gemisch zum Durchführen des Sinterprozesses bereitgestellt wird.

Das beschriebene Verfahren kann ferner das Aufbringen einer mit Partikeln aufgebauten Beschichtung, welche eine kleinere Porengröße aufweist als der Filterkörper, an einer Zuströmoberfläche des Filterelements umfassen. Damit wird ein zur Oberflächenfiltration geeignetes Filterelement geschaffen.

Das hierin beschriebene Filterelement eignet sich für praktisch alle Filteraufgaben, bei denen irgendeine konkrete Dauereinsatztemperatur in dem genannten Temperaturbereich von bis 50 bis 200 C gefordert ist. Besondere Eignung besteht zum Filtern von Verbrennungsabgasen, insbesondere in solchen Fällen, in denen Verbrennungsabgase bei höher Temperatur auftreten. Weitere Anwendungsgebiete zur Produktabscheidung aus einem Gasstrom umfassen Wirbelbetttrockner, Trockner in der Lebensmittelindustrie, Sprühtrockner in der Waschmittelindustrie, Kalzinieröfen, pyrogene Partikelproduktion. Das Filterelement ist ferner gut geeignet zur Wertstoffrückgewinnung aus einem Gasstrom, vorzugsweise zur Rückgewinnung von Katalysator bei katalytischen Wirbelbettreaktoren sowie zur Abgasreinigung, vorzugsweise bei Metallbädern, Metallschmelzöfen, Bädern mit flüssigem Glas, Klinkerkühlern, Öfen in der Lichtwellenleiter-Herstellung, Röstanlagen in der Lebensmittelindustrie.

Neben der Reinigung von Abgasen eignet sich das hierin beschriebenen Filterelement auch zur Verwendung beim Filtern eines Flüssigkeitsstroms.

Bei der Auswahl von Füllstoffen und Zusatzstoffen wird auf die gewünschte Temperaturbeständigkeit und/oder Hydrolysebeständigkeit geachtet.

Die Erfindung und besondere Ausgestaltungen der Erfindung werden nachfolgend an Hand von Ausführungsbeispielen noch näher erläutert. Es zeigt:
- Fig. 1: einen Ausschnitt einer gefüllten Form, im Schnitt, zur Herstellung eines Filterelements, und zwar im Zustand vor dem Sintern;
- Fig. 2: einen Ausschnitt eines Filterelements ohne Oberflächenbeschichtung, im Schnitt;
- Fig. 3: einen Ausschnitt eines Filterelements, im Schnitt, nachdem eine Oberflächenbeschichtung aufgebracht worden ist;
- Fig. 4: ein Ausführungsbeispiel eines erfindungsgemäßen Filterelements mit einem Filterkopf, der an einer hochkant angeordneten Trennwand zwischen Rohfluidraum und Reinfluidraum, gehalten ist;
- Fig. 5: einen Schnitt durch das Filterelement an der in Fig. 4 mit V-V bezeichneten Position;
- Fig. 6: einen Schnitt durch das Filterelement an der in Fig. 4 mit VI-VI bezeichneten Position; und
- Fig. 7: eine mikrospopische Aufnahme eines gesinterten Filterkörper gemäß dem ersten Beispiel.

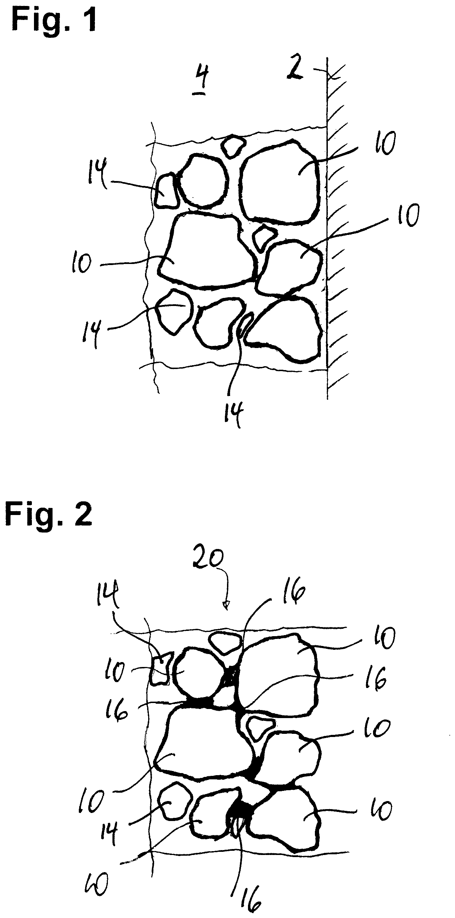

Fig. 1 zeigt einen Ausschnitt einer Form 2, die einen Formhohlraum 4 umschliesst. In den Formhohlraum 4 eingefüllt worden sind Filterkörperteilchen, in diesem Fall Polysulfidteilchen 10, d.h. Teilchen aus einem Polysulfidmaterial wie hierin beschrieben. Die Filterkörperteilchen stellen das Ausgangsmaterial für einen Filterkörper 12 dar. Außerdem erkennt man in Fig. 1 Hohlglaskugeln 14, die als Füllstoff Räume zwischen den Polysulfidteilchen 10 ausfüllen.

Fig. 2 zeigt den Zustand, nachdem die Form 2 gerüttelt und für eine geeignete Zeitdauer auf eine Sintertemperatur erwärmt worden ist. Die Polysulfidteilchen 10 haben an Kontaktestellen zwischen benachbarten Polysulfidteilchen 10, d.h. an Stellen, wo benachbarte Polysulfidteilchen 10 sich berührten oder nahezu berührten, Sinterhälse 16 gebildet. An den Sinterhälsen 16 sind die Polysulfidteilchen 10 zusammengewachsen, so dass sich ein durchströmungsporöses Sintergefüge gebildet hat, das einen zusammenhängenden, jedoch immer noch durchströmungsporösen Filterkörper 20 bildet. Nach Abkühlen des Filterkörpers 20 bildet das so erzeugte Sintergefüge eine eigenstabile Festkörperstruktur, so dass der nunmehr zusammengesinterte Filterkörper 20 aus der in Fig. 1 noch gezeigten Sinterform 2 entnommen werden kann. Fig. 2 zeigt den Filterkörper 20, nachdem er aus der geöffneten Sinterform 2 entnommen worden ist.

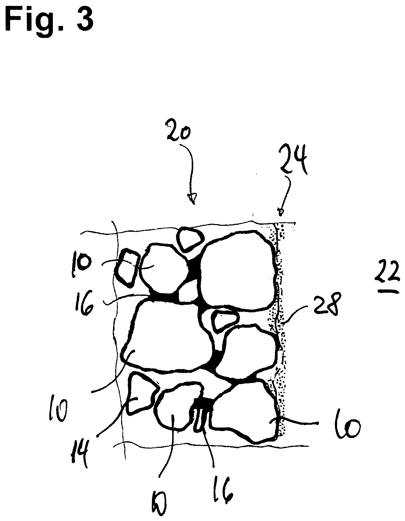

Fig. 3 zeigt schließlich einen Zustand, in dem nach dem Entformen aus der Sinterform 2 an dem Filterkörper 20 auf einer Seite 22, das ist die rechte Seite in Fig. 3, die beim Betrieb die Zuströmseite bildet, eine Beschichtung 24 zur Oberflächenfiltration aufgebracht worden ist. Die Beschichtung 24 enthält feinkörnige Kunststoffteilchen 28. Die Kunstoffteilchen 28 besitzen typischerweise Antihafteigenschaften und können beispielsweise Polytetrafluorethylenteilchen sein. Die durchschnittliche Größe der Kunststoffteilchen 28 kann je nach Anwendung zwischen 0,3 und 30 µm liegen. Im Falle von Polytetrafluorethylenteilchen bilden die Teilchen Polytetrafluorethylenagglomerate. Die Teilchen 28 können insbesondere dadurch aufgebracht werden, dass man zunächst auf die betreffende Oberfläche des rohen Filterkörpers 20 einen Klebstoff aufsprüht und dann die Teilchen 28 aufbläst. Alternativ kann man erst die Teilchen 28 aufblasen und dann einen flüssigen Klebstoff aufsprühen. Die Beschichtung kann auch als Flüssigkeit aufgetragen werden, z. B. bestehend aus einer wässrigen Emulsion von Partikeln und Klebstoff. Der Klebstoff kann ein Duroplast sein, der anschließend bei Raumtemperatur oder bei erhöhter Temperatur aushärtet.

Die Hohlglaskugeln 14 sind optional. Grundsätzlich könnte der Filterkörper 20 auch nur aus den Polysulfidteilchen 10 aufgebaut sein.

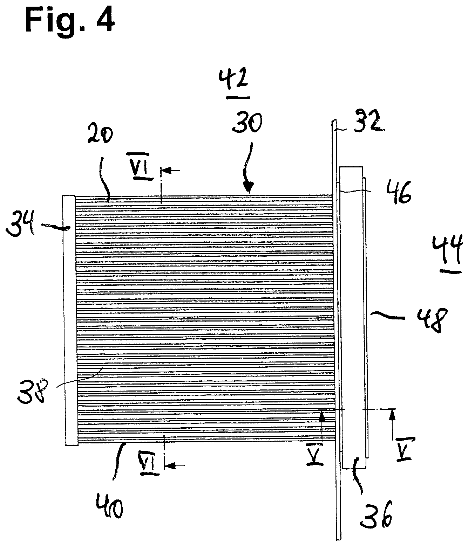

Fig. 4 zeigt ein erfindungsgemäßes Filterelement 30 mit einem Filterkörper 20, der wie oben beschrieben aufgebaut ist, sowie einem an den Filterkörper 20 angeformten Filterfuß 34 und einem an dem Filterkörper 20 angeformten Filterkopf 36. Das in Fig. 4 gezeigte Filterelement 30 ist an einer hochkant angeordneten Trennwand 32 gehalten, wobei seine Längsrichtung zwischen Filterkopf 36 und Filterfuß 34 in horizontaler Richtung verläuft. Fig. 4 zeigt das Filterelement 30 in Blickrichtung auf eine von zwei großen, zick-zack-artig oder gewellt verlaufenden, ersten Seitenwänden 38. Schmale, zweite Seitenwände 40 verbinden die ersten Seitenwände 38 seitlich miteinander zu einem kastenartigen Gebilde. Die Trennwand 32 ist Teil einer weiter nicht gezeigten Filtervorrichtung ist und trennt eine Rohfluidseite 42 der Filtervorrichtung von einer Reinfluidseite 44.

Das Filterlement 30 ist mit seinem Filterkopf 36 an der hochkant angeordneten Trennwand 32 "seitlich" befestigt. In Fig. 4 ist der sogenannte reinfluidseitige Einbau des Filterelements 30 dargestellt, bei dem eine die Seitenwände 38, 40 überragende Seitenfläche des Filterkopfes 36, die zum Filterfuß 34 hin weist, auf der Reinfluidseite 44 an der Trennwand 32 befestigt ist und der Filterkörper 20 des Filterelements 30 durch eine Öffnung in der Trennwand 32 hindurch ragt. Zwischen dem Filterkopf 36 und der Trennwand 32 erkennt man eine Dichtung 44 als Abdichtung zwischen der Rohfluidseite 42 und der Reinfluidseite 46. Dies erlaubt einen Austausch des Filterelements 30 von der "sauberen" Reinfluidseite 44 her. Alternativ ist auch der sogenannte rohfluidseitige Einbau des Filterelements 30 möglich, bei dem der Filterkopf 36 mit seiner dem Filterfuß 34 entgegengesetzten Seitenfläche von der Rohfluidseite 42 her an der Trennwand 32 befestigt ist. Der Ein- und Ausbau des Filterelements 30 erfolgt dann über die Rohfluidseite 42. Selbstverständlich kann das Filterelement 30 statt seitlich auch hängend befestigt sein. Die Trennwand 32 ist dann quer in der Art eines Zwischenbodens in der Filtervorrichtung zwischen einer beispielsweise unten liegenden Rohfluidseite 42 und einer oben liegenden Reinfluidseite 44 vorgesehen. Auch in dieser hängenden Einbauposition des Filterelements 30 kann entweder ein reinfluidseitiger oder ein rohfluidseitiger Einbau des Filterelements 30 vorgesehen sein.

Beim Betrieb der Vorrichtung wird das zu filternde Medium durch eine nicht gezeigte Öffnung in die Vorrichtung eingesaugt oder durch Überdruck in die Vorrichtung eingedrückt und strömt von der Rohfluidseite 42 durch die porösen Seitenwände 38, 40 in das hohle Innere des Filterelements 30 und wird von dort durch eine Durchströmungsöffnung 48 im Filterkopf 36 auf die Reinfluidseite 44 hin gesaugt. Von dort aus wird es durch eine ebenfalls nicht gezeigte Öffnung wieder nach außerhalb der Filtervorrichtung abgegeben. Die von dem zu filternden Medium zu trennenden Feststoffteilchen werden von einer feinporösen Schicht auf der Oberfläche des Filterelements 30 zurückgehalten und bleiben dort zum Teil haften. Diese Schicht aus anhaftenden Feststoffteilchen wird in regelmäßigen Abständen durch eine Abreinigung, beispielsweise durch einen Druckluftstoß, der der Strömungsrichtung entgegengesetzt ist, abgesprengt und fällt dann auf der Rohfluidseite 42 der Vorrichtung zu Boden.

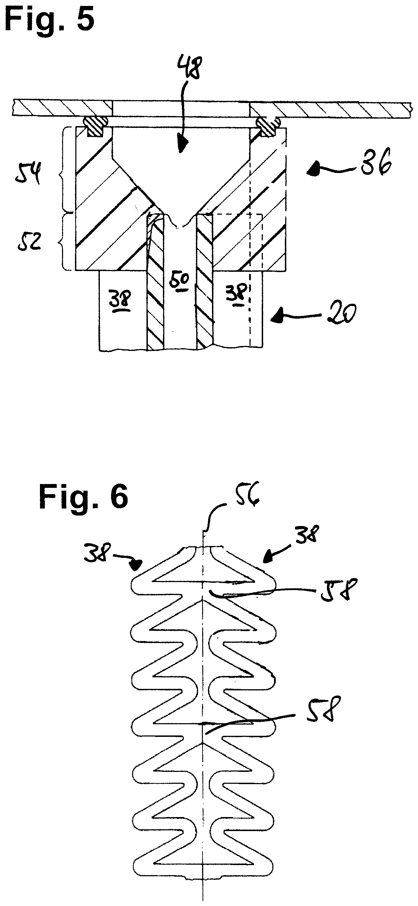

In der Fig. 5 erkennt man den zick-zack-artig oder gewellt begrenzten Raum 50 zwischen den beiden ersten Seitenwänden 38 der sich in der Durchströmungspassage 48 durch den Filterkopf 36 bis zu der Reinfluidseite 44 fortsetzt. Im Unterschied zu Fig. 4 zeigt Fig. 5 den rohfluidseitigen Einbau des Filterelements 30.

Die Seitenwände 38 des Filterelements 30 sind durchströmungsporöse Gebilde, die aus zusammengesinterten Polysulfidteilchen 10 bestehen, wie hierin beschrieben. Auf der Zuströmseite des Filterelements 30 kann eine feiner poröse Beschichtung 24 beispielsweise aus feinkörnigeren Polytetrafluorethylenteilchenaufgebracht sein, wodurch sich die Oberflächenfiltrationseigenschaften besonders gut steuern lassen und besonders gut an die zu filternden Stoffe anpassen lassen.

Der Filterkopf 36 wie auch der Filterfuß 34 sind aus einem Kunststoffmaterial gefertigt, das dem Polysulfidmaterial des Filterkörpers 20 angepasst ist, und sind an den Filterkörper 20 angeformt, beispielsweise angespritzt. Bei dem in Fig. 2 gezeigten Übergang zwischen dem Filterkörper 20 und dem Filterkopf 36 sind die Seitenwände 38 des Filterkörpers von dem Filterkopf 36 mit einem ersten Teil 52 seiner Höhe außenseitig eingefasst, während ein zweiter Teil 54 der Höhe des Filterkopfes 36 die Seitenwände 38 nach oben überragt und diese an deren oberen Enden überdeckt. Damit wird die Verbindungsfläche zwischen den Seitenwänden 38 und dem Filterkopf 36 besonders groß.

Grundsätzlich eignet sich jedes beliebige Kunstharz zum Anformen von Filterkopf 36 und Filterfuß 34 an die Seitenwände 38 des Filterelements 30. Jedoch ist es besonders günstig, wenn das Material von Filterkopf 36 und Filterfuß 34 sich hinsichtlich thermischer Belastung möglichst ähnlich verhält wie das Material des Filterkörpers 20. Es ist daher zu empfehlen den angeformten Filterkopf 36 bzw. Filterfuß 34 aus möglichst demselben Polysulfid-Kunststoff auszubilden wie den Filterkörper 20. Allerdings brauchen Filterkopf und Filterfuß nicht durchströmungsporös zu sein. Dann dehnen sich Filterkopf 36 bzw. Filterfuß 34 und Filterkörper 20 bei thermischer Belastung in demselben Maße.

Grundsätzlich ist in Fig. 5 der Schnitt durch das Filterelement 30 an einer Stelle des Filterelements 30 gezeigt, wo die zick-zackartig verlaufenden, ersten Seitenwände 38 einander nahe kommen. Auf der rechten Seite der Fig. 5 aber auch gestrichelt der am weitesten außen liegende, dahinterliegende Wandbereich des Verlaufs angedeutet. Dabei ist auch gezeigt, wie die Durchströmungspassage 48 strömungsgünstig von einem im wesentlichen rechteckigen Strömungsquerschnitt im oberen Bereich des Filterkopfes 36 in das Innere des Filterelements 30 übergeht. Der Übergang verläuft von dem am weitesten innen liegenden Wandbereichen trichterförmig schräg nach oben außen. Während er von den am weitesten außen liegenden Wandbereichen im wesentlichen geradlinig oder mit nur einer geringen Neigung verläuft.

Im dem in Fig. 6 gezeigten Schnitt erkennt man zum Teil zwei erste Seitenwände 38 und eine schmale, zweite Seitenwand 40. Man erkennt außerdem, dass das Filterelement 30 aus zwei entlang ihrer Längsachse 56 miteinander vereinigten Hälften 38, 38 gebildet ist. Die beiden Hälften 38, 38 können miteinander beispielweise durch Kleben, durch Sintern, durch Verschweißen oder sonstwie vereinigt sein. Selbstverständlich ist auch eine einstückige Herstellung des Filterelements 30 möglich.

Die beiden Hälften 38 und 38 sind außer an den zweiten schmalen Seitenwänden 40 auch zwischen diesen entlang von Wandbereichen 58, vorzugsweise vom Filterkopf 36 bis zum Filtefuß 34 miteinander verbunden. Das ergibt eine Unterteilung in kleinere, kastenartige Elemente oder Zellen, was die Festigkeit des gesamten Filterelements 30 erhöht, da die einzelnen Zellen selbst bereits eine relativ hohe Festigkeit besitzen.

Die ersten Seitenwände 38 besitzen einen im wesentlichen zick-zackförmigen Verlauf, und sie sind aus aufeinanderfolgenden ersten und zweiten Wandabschnittengebildet, die aneinander anschliessen. In Fig. 6 erkennt sehr schön die "tannenbaumartige" Form des Filterelements 30, welches einen Lamellenfilter bildet.

Neben der in den Fig. 4 bis 6 gezeigten kastenartigen Gestalt des Filterkörpers sind auch Filterelemente mit anders geformten Filterkörpern möglich, beispielsweise rohrförmige Filterelemente, bei denen der Filterkörper eine im Wesentlichen zylindrische Gestalt hat.

### BEISPIELE:

Nachfolgend werden einige Beispiele für erfindungsgemäße Filterelemente angegeben:

### Beispiel 1:

Grobkörniges Kunststoff-Pulver aus Polyphenylensulfid (PPS)-Teilchen mit einer mittleren Korngröße von 100 µm wurde gründlich vermischt und in eine Temperform gefüllt. Das PPS-Pulver hatte folgende Eigenschaften: Dichte gemäß ASTM D792: 1340 kg/m³; Wasseraufnahme bei 23 °C pro 24h gemäß ASTM D570: 0,05%, Zugmodul gemäß ISO 527-2: 3400 Mpa, Schmelzpunkt gemäß ISO 11357-3: 280 °C; Glasumwandlungspunkt gemäß ISO 11357-2: 90 °C. Die Temperform wurde während des Einfüllens der Kunststoff-Teilchen gerüttelt.

Die in die Form gefüllten pulverförmigen Teilchen wurden in einem Umluftofen für 11 Stunden bei einer Temperatur von 270 °C in einer Umgebung mit Umgebungsluft getempert. Nach dem Tempervorgang konnte eine Verfärbung der Polyphenylensulfidteilchen zu brauner Farbe beobachtet werden. Die Korngrößenverteilung der Polyphenylensulfidteilchen hatte sich durch den Temperprozess nicht signifikant verändert.

Sowohl für die ungetemperten Teilchen als auch für die getemperten Teilchen wurde der Schmelzindex bei 316 °C pro 5 kg nach ASTM D 1238-13, Procedure B bestimmt. Diese Bestimmung ergab einen Schmelzindex von 100 g/10 min für die ungetemperten Polyphenylensulfidteilchen. Nach dem Tempern sank der Schmelzindex des Filterkörperteilchen so stark ab, dass er mit der angewandten Methode nicht mehr messbar war.

Die getemperten Polyphenylensulfidteilchen wurden nach Abkühlen und erneutem Sieben in eine Sinterform gefüllt mit Abmessungen 300 mm x 480 mm x 4 mm. Die mittlere Korngröße der Polyphenylensulfidteilchen betrug weitherhin 100 µm. Die Sinterform wurde während des Befüllens gerüttelt, um eine genügend dichte Packung der Polyphenylensulfidteilchen zur erreichen. Die in die Sinterform gefüllten Polyphenylensulfidteilchen wurden dann in einem Sinterofen für 60 min bei einer Sintertemperatur von 310 °C gesintert.

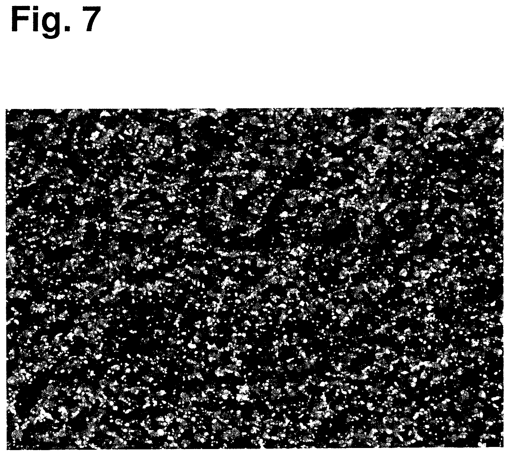

Nach Entnahme aus dem Sinterofen wurde die gesinterte Filterkörperplatte entformt und auf ihre mechanischen Eigenschaften getestet. Eine mikroskopische Aufnahme eines Auschnitts aus der Filterkörperplatte nach dem Sintern in dreißigfacher Vergrößerung ist in Fig. 7 gezeigt.

Aus der Platte wurden verschiedene Teststücke ausgeschnitten und auf mechanische Eigenschaften bzw. Porosität getestet.

Ein erstes Teststück von 110 mm x 10 mm wurde einem Zugversuch gemäß DIN EN ISO 527-2 (2012-06) bei einer Prüfgeschwindigkeit von 80 mm/min unterzogen. Hierbei zeigte sich in einem Spannungs-Dehnungs-Diagramm eine Zugfestigkeit des Teststücks von 1,77 N/mm² und eine maximale Dehnung des Teststücks von 0,34 mm bis zum Bruch.

Eine Bestimmung der Porengrößenverteilung an einem weiteren Teststück mit Abmessungen 250 mm x 250 mm ergab eine Porosität von 65 %.

Ein weiteres Teststück mit Abmessungen 280 mm x 280 mm wurde zur Bestimmung des Druckverlusts herangezogen. Dabei wurde ein Druckverlust von 1000 Pa ermittelt, gemessen gegenüber einem Luftstrom ohne Fremdstoffbeladung bei einem Volumenstrom von 12,011 m³/(m² x min) und bei einer luftdurchströmten Fläche des Teststücks von 256 mm x 256 mm.

### Beispiel 2:

Grobkörniges Kunststoff-Pulver aus Polyphenylensulfid (PPS)-Teilchen mit einer mittleren Korngröße von 100 µm wurde gründlich vermischt und in eine Temperform gefüllt. Das PPS-Pulver hatte folgende Eigenschaften: Dichte gemäß ASTM D792: 1340 kg/m³; Wasseraufnahme bei 23 °C pro 24h gemäß ASTM D570: 0,05%, Zugmodul gemäß ISO 527-2: 3400 Mpa, Schmelzpunkt gemäß ISO 11357-3: 280 °C; Glasumwandlungspunkt gemäß ISO 11357-2: 90 °C. Die Temperform wurde während des Einfüllens der Kunststoff-Teilchen gerüttelt.

Die in die Form gefüllten pulverförmigen Teilchen wurden in einem Umluftofen für 11 Stunden bei einer Temperatur von 270 °C in einer Umgebung mit Umgebungsluft getempert. Nach dem Tempervorgang konnte eine Verfärbung der Polyphenylensulfidteilchen zu brauner Farbe beobachtet werden. Die Korngrößenverteilung der Polyphenylensulfidteilchen hatte sich durch den Temperprozess nicht signifikant verändert.

Sowohl für die ungetemperten Teilchen als auch für die getemperten Teilchen wurde der Schmelzindex bei 316 °C pro 5 kg nach ASTM D 1238-13, Procedure B bestimmt. Diese Bestimmung ergab einen Schmelzindex von 100 g/10 min für die ungetemperten Polyphenylensulfidteilchen. Nach dem Tempern sank der Schmelzindex des Polyphenylensulfidteilchen so stark ab, dass er mit der angewandten Methode nicht mehr messbar war.

Eine Mischung aus 20 Gewichtsprozent der ungetemperten PPS-Teilchen und 80 Gewichtsprozent der getemperten PPS-Teilchen, nach Abkühlen und erneutem Sieben der getemperten Polyphenylensulfidteilchen hergestellt. Die mittlere Korngröße der Polyphenylensulfidteilchen betrug nach dem Sieben weitherhin 100 µm. Die Mischung wurde in eine Sinterform gefüllt mit Abmessungen 300 mm x 480 mm x 4 mm. Die Sinterform wurde während des Befüllens gerüttelt, um eine genügend dichte Packung Polyphenylensulfidteilchen-Gemischs zur erreichen. Die in die Sinterform gefüllten Polyphenylensulfidteilchen wurden dann in einem Sinterofen für 60 min bei einer Sintertemperatur von 305 °C gesintert.

Nach Entnahme aus dem Sinterofen wurde die gesinterte Filterkörperplatte entformt und auf ihre mechanischen Eigenschaften getestet.

Aus der Platte wurden verschiedene Teststücke ausgeschnitten und auf mechanische Eigenschaften bzw. Porosität getestet.

Ein erstes Teststück von 110 mm x 10 mm wurde einem Zugversuch gemäß DIN EN ISO 527-2 (2012-06) bei einer Prüfgeschwindigkeit von 80 mm/min unterzogen. Hierbei zeigte sich in einem Spannungs-Dehnungs-Diagramm eine Zugfestigkeit des Teststücks von 4,46 N/mm² und eine maximale Dehnung des Teststücks von 0,44 mm bis zum Bruch.

Eine Bestimmung der Porengrößenverteilung an einem weiteren Teststück mit Abmessungen 250 mm x 250 mm ergab eine Porosität von 63 %
Ein weiteres Teststück mit Abmessungen 280 mm x 280 mm wurde zur Bestimmung des Druckverlusts herangezogen. Dabei wurde ein Druckverlust von 1160 Pa ermittelt, gemessen gegenüber einem Luftstrom ohne Fremdstoffbeladung bei einem Volumenstrom von 12,011 m³/(m² x min) und bei einer luftdurchströmten Fläche des Teststücks von 256 mm x 256 mm.

### Beispiel 3:

Grobkörniges Kunststoff-Pulver aus Polyphenylensulfid (PPS)-Teilchen mit einer mittleren Korngröße von 100 µm wurde gründlich vermischt und in eine Temperform gefüllt. Das PPS-Pulver hatte folgende Eigenschaften: Dichte gemäß ASTM D792: 1340 kg/m³; Wasseraufnahme bei 23 °C pro 24h gemäß ASTM D570: 0,05%, Zugmodul gemäß ISO 527-2: 3400 Mpa, Schmelzpunkt gemäß ISO 11357-3: 280 °C; Glasumwandlungspunkt gemäß ISO 11357-2: 90 °C. Die Temperform wurde während des Einfüllens der Kunststoff-Teilchen gerüttelt.

Die in die Form gefüllten pulverförmigen Teilchen wurden in einem Umluftofen für 11 Stunden bei einer Temperatur von 270 °C in einer Umgebung mit Umgebungsluft getempert. Nach dem Tempervorgang konnte eine Verfärbung der Polyphenylensulfidteilchen zu brauner Farbe beobachtet werden. Die Korngrößenverteilung der Polyphenylensulfidteilchen hatte sich durch den Temperprozess nicht signifikant verändert.

Sowohl für die ungetemperten Teilchen als auch für die getemperten Teilchen wurde der Schmelzindex bei 316 °C pro 5 kg nach ASTM D 1238-13, Procedure B bestimmt. Diese Bestimmung ergab einen Schmelzindex von 100 g/10 min für die ungetemperten Polyphenylensulfidteilchen. Nach dem Tempern sank der Schmelzindex des Polyphenylensulfidteilchen so stark ab, dass er mit der angewandten Methode nicht mehr messbar war.

Eine Mischung aus 25 Gewichts % Blähglaskugeln und 75 Gewichts % der getemperten Polyphenylensulfidteilchen wurde nach Abkühlen und erneutem Sieben der Polyphenylensulfidteilchen hergestellt. Die mittlere Korngröße der Polyphenylensulfidteilchen betrug nach dem Sieben weitherhin 100 µm. Die Mischung wurde in eine Sinterform gefüllt mit Abmessungen 300 mm x 480 mm x 4 mm. Die Sinterform wurde während des Befüllens gerüttelt, um eine genügend dichte Packung Polyphenylensulfidteilchen/Blähglaskugeln-Gemischs zur erreichen. Die in die Sinterform gefüllten Polyphenylensulfidteilchen wurden dann in einem Sinterofen für 60 min bei einer Sintertemperatur von 315 °C gesintert.

Nach Entnahme aus dem Sinterofen wurde die gesinterte Filterkörperplatte entformt und auf ihre mechanischen Eigenschaften getestet.

Aus der Platte wurden verschiedene Teststücke ausgeschnitten und auf mechanische Eigenschaften bzw. Porosität getestet.

Ein erstes Teststück von 110 mm x 10 mm wurde einem Zugversuch gemäß DIN EN ISO 527-2 (2012-06) bei einer Prüfgeschwindigkeit von 80 mm/min unterzogen. Hierbei zeigte sich in einem Spannungs-Dehnungs-Diagramm eine Zugfestigkeit des Teststücks von 3,71 N/mm² und eine maximale Dehnung des Teststücks von 0,39 mm bis zum Bruch.

Eine Bestimmung der Porengrößenverteilung an einem weiteren Teststück mit Abmessungen 250 mm x 250 mm ergab eine Porosität von 52 %.

Ein weiteres Teststück mit Abmessungen 280 mm x 280 mm wurde zur Bestimmung des Druckverlusts herangezogen. Dabei wurde ein Druckverlust von 3030 Pa ermittelt, gemessen gegenüber einem Luftstrom ohne Fremdstoffbeladung bei einem Volumenstrom von 12,011 m³/(m² x min) und bei einer luftdurchströmten Fläche des Teststücks von 256 mm x 256 mm.

## Patentansprüche

1. Verfahren zum Herstellen eines durchströmungsporösen, eigenstabilen Filterelements (30), mit folgenden Schritten:
Bereitstellen von Filterkörperteilchen, die wenigstens zum Teil Polysulfidteilchen (10) sind, und
Sintern der Filterkörperteilchen zu einem porösen Sintergefüge, um einen Filterkörper (20) des Filterelements (30) zu bilden,
**gekennzeichnet durch** Unterziehen der Polysulfidteilchen (10) einer Temperung bei einer Temperatur von 255 °C bis 275 °C über eine Zeitdauer von 7 bis 24 Stunden vor dem Sintern.

2. Verfahren nach Anspruch 1, wobei die Polysulfidteilchen Polyphenylensulfidteilchen sind.

3. Verfahren nach Anspruch 1 oder 2, wobei das Sintern bei Umgebungsdruck und/oder bei einer Temperatur von 290 °C bis 350 °C, insbesondere von 310 °C bis 320 °C, und/oder über eine Zeitdauer von 5 min bis 180 min, insbesondere von 40 min bis 100 min, insbesondere von 60 min bis 80 min erfolgt.

4. Verfahren nach einem der Ansprüche 1 bis 3, wobei die Temperung bei einer Temperatur von 265 °C bis 275 °C und/oder über eine Zeitdauer von 10 bis 12 Stunden erfolgt.

5. Verfahren nach einem der Ansprüche 1 bis 4, wobei wenigstens zwei Polysulfide unterschiedlicher Konfiguration herangezogen werden, um die Filterkörperteilchen bereitzustellen.

6. Verfahren nach Anspruch 5, wobei wenigstens ein getempertes Polysulfid und wenigstens ein nicht getempertes Polysulfid herangezogen wird, um die Filterkörperteilchen bereitzustellen.

7. Durchströmungsporöses, eigenstabiles Filterelement (30) mit einem ein poröses Sintergefüge bildenden Filterkörper (20), der mit Filterkörperteilchen (10, 14) aufgebaut ist, die wenigstens zum Teil Polysulfidteilchen (10) sind, wobei das Filterelement (30) nach dem Verfahren gemäß einem der Ansprüche 1 bis 6 hergestellt ist.

8. Filterelement (30) nach Anspruch 7, wobei alle Filterkörperteilchen Polysulfid enthalten; und/oder wobei ein Teil der Filterkörperteilchen aus Polysulfid besteht, insbesondere alle Filterkörperteilchen aus Polysulfid bestehen.

9. Filterelement nach 7 oder 8, wobei die Polysulfidteilchen (10) wenigstens zwei Polysulfide mit verschiedener Konfiguration und/oder ungefülltes Polysulfid enthalten.

10. Filterelement (30) nach einem der Ansprüche 7 bis 9, wobei die Filterkörperteilchen (10) einen Schmelzfließindex von höchstens 500 g/10 min, insbesondere von höchstens 250 g/10 min, insbesondere von höchstens 100 g/10 min haben.

11. Filterelement (30) nach einem der Ansprüche 7 bis 10 welches eine Porosität von mindestens 30%, insbesondere mindestens 50, insbesondere bis zu 70 %, aufweist, und/oder wobei der Filterkörper (20) derart ausgebildet ist, dass der Druckverlust über das Filterelement (30), gemessen gegenüber einem Luftstrom ohne Fremdstoffbeladung bei einem Volumenstrom von 12,011 m³/(m² x min) und bei einer luftdurchströmten Fläche des Filterkörpers (20) von 256 mm x 256 mm mit einer Dicke von 4 mm, höchstens 2000 Pa beträgt, insbesondere höchstens 1200 Pa beträgt, insbesondere zwischen 100 und 2000 Pa liegt.

12. Filterelement (30) nach einem der Ansprüche 7 bis 11, wobei die Polysulfidteilchen (10) eine durchschnittliche Größe von 50 bis 500 µm, insbesondere 100 bis 350 µm, haben; und/oder wobei der Filterkörper (20) neben den Polysulfidteilchen(10) Teilchen anderer Konfiguration aufweist, insbesondere Teilchen organischer oder anorganischer Konfiguration.

13. Filterelement (30) nach einem der Ansprüche 7 bis 12, wobei das Filterelement (30) auf einer Zuströmseite (22) mit einer mit Partikeln (28) aufgebauten Beschichtung (24) versehen ist, welche eine kleinere Porengröße aufweist als der Filterkörper (20).

14. Filterelement (30) nach einem der Ansprüche 7 bis 13, wobei der Filterkörper (20) in einem Zugversuch eine Zugfestigkeit von mindestens 1 N/mm², insbesondere mindestens 2 N/mm², insbesondere mindestens 4 N/mm², und insbesondere zwischen 1 N/mm² und 25 N/mm² hat und/oder wobei der Filterkörper (20) in einem Zugversuch wie hierin beschrieben eine Reißdehnung von mindestens 0,2 mm, insbesondere mindestens 0,5 mm, insbesondere mindestens 1 mm, und insbesondere zwischen 0,5 mm und 10 mm, hat.

15. Filterelement (30) nach einem der Ansprüche 7 bis 14, welches als Lamellenfilterelement ausgebildet ist, welches ferner insbesondere einen Filterkopf (36) und einen Filterfuß (34) aufweist, welche ebenfalls Polysulfid enthalten und insbesondere mit demselben Material wie der Filterkörper (10) aufgebaut sind; und welches insbesondere für eine Dauereinsatztemperatur ausgebildet ist, die eine Temperatur im Bereich von 50 bis 200 °C, insbesondere von 80 bis 200 C, insbesondere von 100 bis 200 C, insbesondere 120 bis 200 C, ist.

## Claims

1. A method of manufacturing a filter element (30) having inherent stability and being porous to permit flow therethrough, said method comprising the steps of:
providing filter body particles which are at least in part polysulfide particles (10), and
sintering the filter body particles to a porous sintered structure to form a filter body (20) of the filter element (30),
**characterised by**
subjecting the polysulfide particles (10) to tempering at a temperature from 255 to 275 °C over a period of time from 7 to 24 hours prior to sintering.

2. The method of claim 1, wherein the polysulfide particles are polyphenylene sulfide particles.

3. The method of claim 1 or 2, wherein the sintering takes place at ambient pressure and/or at temperature of 290 °C to 350 °C, in particular 310 °C to 320 °C, and/or over a period of time from 5 min to 180 min, in particular from 40 min to 100 min, in particular from 60 min to 80 min.

4. The method of any of claims 1 to 3, wherein the tempering is carried out over a period of time of 10 to 12 hours.

5. The method of any of claims 1 to 4, wherein at least two polysulfides of different configuration are used for providing the filter body particles.

6. The method of claim 5, wherein at least one tempered polysulfide and at least one untempered polysulfide are used for providing the filter body particles.

7. A filter element (30) having inherent stability and being porous to permit flow therethrough, comprising a filter body (20) which forms a porous sintered structure and is constructed with filter body particles (10, 14) which are at least in part polysulfide particles (10), wherein the filter element (30) is manufactured in accordance with the method of any of claims 1 to 6.

8. The filter element (30) of claim 7, wherein all filter body particles contain polysulfide; and/or wherein part of the filter body particles consists of polysulfide, in particular all filter body particles consist of polysulfide.

9. The filter element of claim 7 or 8, wherein the polysulfide particles (10) contain at least two polysulfides of different configuration and/or unfilled polysulfide.

10. The filter element (30) of any of claims 7 to 9, wherein the filter body particles (10) have a melt flow index of at the most 500 g/10 min, in particular of at the most 250 g/10 min, in particular of at the most 100 g/10 min.

11. The filter element (30) of any of claims 7 to 10, which has a porosity of at least 30 %, in particular at least 50 %, in particular of up to 70 %, and/or wherein the filter body (20) is formed such that the pressure loss across the filter element (30), measured with respect to an air flow without foreign matter load at a volumetric flow rate of 12.011 m³/(m² x min) and with an air flow-through area of the filter body (20) of 256 mm x 256 mm with a thickness of 4 mm, is at the most 2000 Pa, in particular at the most 1200 Pa, in particular between 100 and 2000 Pa.

12. The filter element (30) of any of claims 7 to 11, wherein the polysulfide particles (10) have an average size of 50 to 500 µm, in particular 100 to 350 µm; and/or wherein the filter body (20) comprises, in addition to the polysulfide particles (10), particles of a different configuration, in particular particles of organic or inorganic configuration.

13. The filter element (30) of any of claims 7 to 12, wherein the filter element (30), on an inflow side (22) thereof, is provided with a coating (24) constructed with particles (28), said coating (24) having a smaller pore size than the filter body (20).

14. The filter element (30) of any of claims 7 to 13, wherein the filter body (20) in a tensile test exhibits a tensile strength of at least 1 N/mm², in particular at least 2 N/mm², in particular at least 4 N/mm², and in particular between 1 N/mm² and 25 N/mm², and/or wherein the filter body (20) in a tensile test as described herein has an elongation at break of at least 0.2 mm, in particular at least 0.5 mm, in particular at least 1 mm, and in particular between 0.5 mm and 10 mm.

15. The filter element (30) of any of claims 7 to 14, which is designed as a lamellar filter element, which in particular comprises furthermore a filter head (36) and a filter foot (34) which also contain polysulfide and in particular are constructed with the same material as the filter body (10); and which in particular is designed for a temperature of continuous use, which is a temperature in the range from 50 to 200 °C, in particular from 80 to 200 °C, in particular from 100 to 200 °C, in particular from 120 to 200 °C.

## Revendications

1. Procédé destiné à la fabrication d'un élément auto stable (30) faisant office de filtre, manifestant une porosité à l'écoulement, comprenant les étapes suivantes dans lesquelles :
on procure des particules de corps de filtre qui représentent au moins en partie des particules de polysulfure (10) ; et
on soumet les particules de corps de filtre à un frittage dans le but d'obtenir un produit fritté poreux pour former un corps de filtre (20) de l'élément (30) faisant office de filtre ;
**caractérisé par** le fait de soumettre les particules de polysulfure (10) à un traitement thermique à une température de 255 à 275 °C pendant un laps de temps de 7 à 24 heures avant le frittage.

2. Procédé selon la revendication 1, dans lequel les particules de polysulfure représentent des particules de polyphénylène.

3. Procédé selon la revendication 1 ou 2, dans lequel le frittage a lieu sous une pression ambiante et/ou à une température de 290 °C à 350 °C, en particulier de 310 °C à 320 °C, et/ou pendant un laps de temps de 5 minutes à 180 minutes, en particulier de 40 minutes à 100 minutes, de manière particulière de 60 minutes à 80 minutes.

4. Procédé selon l'une quelconque des revendications 1 à 3, dans lequel le traitement thermique a lieu pendant un laps de temps de 10 à 12 heures.

5. Procédé selon l'une quelconque des revendications 1 à 4, dans lequel on fait appel à au moins deux polysulfures de configurations différentes pour la mise à disposition des particules du corps de filtre.

6. Procédé selon la revendication 5, dans lequel on fait appel à au moins un polysulfure qui a fait l'objet d'un traitement thermique et à au moins un polysulfure qui n'a pas fait l'objet d'un traitement thermique pour la mise à disposition des particules du corps de filtre.

7. Elément autosatble (30) faisant office de filtre, manifestant une porosité à l'écoulement, comprenant un corps de filtre (20) formant un produit fritté poreux, le corps en question étant réalisé à partir de particules de corps de filtre (10, 14) qui représentent au moins en partie des particules de polysulfure (10), dans lequel l'élément (30) faisant office de filtre est fabriqué conformément au procédé selon l'une quelconque des revendications 1 à 6.

8. Élément (30) faisant office de filtre selon la revendication 7, dans lequel toutes les particules du corps de filtre contiennent du polysulfure et/ou dans lequel une partie des particules du corps de filtre sont constituées par du polysulfure, en particulier dans lequel toutes les particules du corps de filtre sont constituées par du polysulfure.

9. Élément faisant office de filtre selon la revendication 7 ou 8, dans lequel les particules de polysulfure (10) contiennent au moins deux polysulfure possédant des configurations différentes et/ou du polysulfure exempt de matières de charge.

10. Élément (30) faisant office de filtre selon l'une quelconque des revendications 7 à 9, dans lequel les particules (10) du corps de filtre possèdent un indice de fluidité à chaud au maximum de 500 g/10 minutes, en particulier au maximum de 250 g/10 minutes, de manière particulière au maximum de 100 g/10 minutes.

11. Élément (30) faisant office de filtre selon l'une quelconque des revendications 7 à 10, qui présente une porosité d'au moins 30 %, en particulier d'au moins 50, en particulier jusqu'à 70 %, et/ ou dans lequel le corps de filtre (20) est réalisé d'une manière telle que la perte de pression sur l'étendue de l'élément (30) faisant office de filtre, que l'on mesure par rapport à un courant d'air en l'absence de charge constituée par des corps étrangers à un courant volumique de 12,011 m³/(m² x min) et sur une surface du corps de filtre (20) traversée par l'écoulement de l'air de 256 mm x 256 mm avec une épaisseur de 4 mm, s'élève au maximum à 2000 Pa, en particulier au maximum à 1200 Pa, et de manière particulière se situe entre 10 et 2000 Pa.

12. Élément (30) faisant office de filtre selon l'une quelconque des revendications 7 à 11, dans lequel les particules de polysulfure (10) possèdent une dimension moyenne de 50 à 500 µm, en particulier de 100 à 350 µm ; et/ou dans lequel le corps de filtre (20) présente, à côté des particules polysulfure (10), des particules possédant une autre configuration, en particulier des particules possédant une configuration organique ou inorganique.

13. Élément (30) faisant office de filtre selon l'une quelconque des revendications 7 à 12, dans lequel l'élément (30) faisant office de filtre est muni, sur un côté d'alimentation (22), d'une enduction (24) constituée par des particules (28) qui présentent une grosseur des pores inférieure à celle du corps de filtre (20).

14. Élément (30) faisant office de filtre selon l'une quelconque des revendications 7 à 13, dans lequel le corps de filtre (20) possède, dans un essai de traction, une résistance à la traction qui s'élève à au moins 1 N/mm², en particulier à au moins 2 N/mm², de manière particulière à au moins 4 N/mm², et de manière particulière qui se situe entre 1 N/mm² et 25 N/mm² et/ou dans lequel le corps de filtre (20) possède, dans un essai de traction, tel que décrit en l'occurrence, un allongement au déchirement s'élevant à au moins 0,2 mm, en particulier à au moins 0,5 mm, de manière particulière à au moins 1 mm, et de manière particulière qui se situe entre 0,5 mm et 10 mm.

15. Élément (30) faisant office de filtre selon l'une quelconque des revendications 7 à 14, qui est réalisé sous la forme d'un élément faisant office de filtre du type à lamelles, qui présente en outre en particulier une tête de filtre (36) et une base de filtre (34), qui contiennent également du polysulfure, et en particulier qui sont réalisées avec le même matériau que celui du corps de filtre (10) ; et qui est réalisé en particulier pour une température d'utilisation en continu, qui représente une température qui se situe dans la plage de 50 à 200 °C, en particulier de 80 à 200 °C, en particulier de 100 à 200 °C, de manière particulière qui s'élève de 120 à 200 °C.
